# EUROPÄISCHE PATENTSCHRIFT

(11) **EP 2 151 726 B1**
(45) Veröffentlichungstag und Bekanntmachung des Hinweises auf die Patenterteilung: **18.12.2019**
(21) Anmeldenummer: 09009876.5
(22) Anmeldetag: 30.07.2009
(51) Int. Cl.: G05B 19/409, B25J 9/16

(54) **Programmierbare Maschine, Programmierhandgerät, Vorrichtung und Verfahren zum Programmieren einer programmierbaren Maschine**
Programmable machine, handheld programming device and method for programming a programmable machine
Machine programmable, appareil manuel programmable et procédé de programmation d'une machine programmable

(30) Priorität: 07.08.2008 DE 102008041074
(43) Veröffentlichungstag der Anmeldung: 10.02.2010
(73) Patentinhaber: KUKA Deutschland GmbH, 86165 Augsburg (DE)
(72) Erfinder: Leibinger, Josef, 88250 Weingarten (DE); Schwarz, Richard, 86316 Friedberg (DE)
(74) Vertreter: Ege Lee & Partner Patentanwälte PartGmbB

(56) Entgegenhaltungen:
- EP-A1- 1 716 983
- EP-A2- 1 621 944
- WO-A1-02/078914
- DE-A1- 10 110 776
- DE-T5-112006 001 639
- US-B1- 6 218 802

## Beschreibung

Die Erfindung betrifft ein Programmierhandgerät und eine Vorrichtung und ein Verfahren zum Programmieren einer programmierbaren Maschine, insbesondere eines Industrieroboters.

Programmierbare Maschinen sind z.B. programmierbare Werkzeugmaschine und insbesondere Industrieroboter. Unter Werkzeugmaschinen versteht man allgemein Maschinen, die zur Bearbeitung von Werkstücken dienen. Werkzeugmaschinen lassen sich in umformende und trennende Werkzeugmaschinen unterteilen, die u.A. im Maschinenbau und im Werkzeugbau eingesetzt werden.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Unter Verfahren zum Programmieren des Industrieroboters (Programmierverfahren) versteht man das planmäßige Vorgehen zur Erzeugung von Anwenderprogrammen. Programmierverfahren lassen sich in direkte, indirekte und hybride Verfahren unterscheiden. Direkte Verfahren werden auch als On-line-Verfahren und indirekte Verfahren werden auch als Off-line-Verfahren bezeichnet. Hybride Verfahren stellen eine Kombination aus direkten und indirekten Verfahren dar.

Zu den direkten Verfahren zählen die sogenannte Teach-In-Programmierung und das Play-Back-Verfahren.

Bei der Teach-In-Programmierung, kurz: Teachen, wird der Industrieroboter z.B. mittels geeigneter Vorrichtungen in die gewünschte Position und/oder Orientierung gefahren und die Position bzw. Orientierung in einer Steuerung des Industrieroboters gespeichert. Dieser Schritt wird solange wiederholt, bis die gesamte gewollte Bewegung des Industrieroboters durch angefahrene Raumpunkte beschrieben ist. So entsteht eine Abfolge von Raumpunkten, die der Industrieroboter nacheinander abfährt. Die US 6,218,802 B1 und die EP 1 716 983 A1 offenbaren solche Verfahren.

Geeignete Vorrichtungen für die Teach-In Programmierung sind Programmierhandgeräte mit Verfahrtasten, mit einer sogenannten Spacemouse, mit einem Joystick oder mit einer Kombination aus Tasten und radförmigem Regler.

Führt der Industrieroboter sein Rechen- bzw. Anwenderprogramm aus, befindet sich der Industrieroboter im sogenannten Automatikbetrieb, in dem der Steuerrechner automatisch Roboterachsen gemäß dem Anwenderprogramm steuert. Während der Programmierung des Industrieroboters befindet dieser sich im sogenannten Handbetrieb. Im Handbetrieb sollte jedoch sicher gestellt sein, dass der Industrieroboter, allgemein die programmierbare Maschine, nicht unbeabsichtigt in den Automatikbetrieb geschaltet wird.

Die EP 1 621 944 A2 offenbart ein Sicherheitssystem für ein Industrieautomatisierungssystem, für das ein Benutzer-Interface vorgesehen ist, das mit einem personalisierten Datenträger koppelbar ist. Mittels des personalisierten Datenträgers ist es möglich, der dem Datenträger zugeordneten Person Daten des Automatisierungssystems zugänglich zu machen.

Die WO 02/078914 A1 offenbart ein Programmierhandgerät zum Programmieren/Steuern einer programmierbaren Maschine, das eine Schnittstelle umfasst, über die das Programmierhandgerät einen der Maschine zugeordneten Datenträger ausliest. Das Programmierhandgerät ist derart eingerichtet, dass es nur dann die Maschine beeinflussen kann, solange der Datenträger operativ mit der Schnittstelle gekoppelt ist.

Die Aufgabe vorliegenden Erfindung ist es, ein Programmierhandgerät zum Programmieren einer programmierbaren Maschine anzugeben, das derart eingerichtet ist, dass in relativ einfacher Weise Voraussetzungen geschaffen sind, dass eine Person die Maschine mittels des Programmierhandgerätes relativ sicher programmieren kann.

Eine weitere Aufgabe der Erfindung ist es, ein für eine Person relativ sicheres Verfahren zum Programmieren einer programmierbaren Maschine mittels eines Programmierhandgerätes anzugeben.

Die Aufgabe der Erfindung wird gelöst durch ein Programmierhandgerät gemäß dem Anspruch 1 und ein Verfahren gemäß dem Anspruch 6.

Ein weiterer Aspekt der Erfindung ist eine Vorrichtung gemäß dem Anspruch 3.

Die programmierbare Maschine ist z.B. eine programmierbare Werkzeugmaschine und insbesondere ein Industrieroboter mit mehreren Roboterachsen, dessen Steuerrechner eingerichtet ist, die Roboterachsen zu steuern. Im Automatikbetrieb steuert der Steuerrechner automatisch die wenigstens eine Achse aufgrund eines auf dem Steuerrechner laufenden Rechenprogramm. Um gegebenenfalls ein unbeabsichtigtes Aktivieren des Automatikbetriebs zu verhindern, kann die Maschine nur dann in ihrem Automatikbetrieb betrieben werden, wenn der erste Datenträger operativ mit der ersten Schnittstelle gekoppelt ist.

Der erste Datenträger ist der Maschine zugeordnet, sodass diese mittels der Schnittstelle der Maschine erkennt, ob der erste Datenträger mit dieser operativ gekoppelt ist.

Handelt es sich z.B. bei dem ersten Datenträger gemäß einer Variante um einen kontaktgebundenen Datenträger, beispielsweise um eine Chipkarte, eine Speicherkarte oder einen USB-Stick, dann handelt es sich bei der Schnittstelle der Maschine um eine entsprechend zum ersten Datenträger ausgebildete kontaktbehaftete Schnittstelle, sodass der erste Datenträger mit der Schnittstelle operativ gekoppelt ist, wenn diese den ersten Datenträger kontaktiert.

Handelt es sich z.B. bei dem ersten Datenträger gemäß einer Variante um einen kontaktlosen Datenträger, dann weist die Schnittstelle der Maschine beispielsweise einen geeigneten drahtlosen Empfänger auf, um mit dem kontaktlosen ersten Datenträger zu kommunizieren. Kontaktlose Datenträger sind z.B. Datenträger, deren Schnittstellen Magnetstreifen aufweisen (Magnetkarte), oder insbesondere Transponder, z.B. sogenannte RFID (Radio Frequency Identification) Transponder (passive oder aktive Transponder). Kontaktlose erste Datenträger können aber auch beispielsweise über eine IR (Infrarot) Schnittstelle verfügen oder auf der Bluetooth oder WLAN Technik basieren. Kontaktlose erste Datenträger sind mit der Schnittstelle der Maschine operativ gekoppelt, solange sie z.B. in Reichweite der z.B. als Empfänger ausgeführten ersten Schnittstelle sind.

Die Maschine kann nach einer Variante ein erstes Lesegerät aufweisen, das die Schnittstelle der Maschine umfasst. Ein Lesegerät wird z.B. benötigt, wenn es sich bei dem ersten Datenträger um einen RFID Transponder handelt.

Um den ersten Datenträger der Maschine eindeutig zuzuordnen, ist gemäß einer Ausführungsform der dem ersten Datenträger ein der Maschine zugeordneter Code gespeichert, der über die Schnittstelle der Maschine ausgelesen wird, damit die Maschine im Automatikbetrieb betreibbar ist. Dieser Code kann z.B. verschlüsselt oder beispielsweise die Seriennummer der relevanten Maschine sein. Der ausgelesene Code wird z. B. vom Steuerrechner ausgewertet, um den Automatikbetrieb zu ermöglichen, zu blockieren oder gegebenenfalls zu stoppen.

Die Schnittstelle der Maschine kann prinzipiell beliebig angeordnet sein. Die Schnittstelle der Maschine kann z.B. an mechanischen Komponenten der Maschine angeordnet sein. Auch ist es möglich, dass der Steuerrechner der Maschine die Schnittstelle umfasst.

Mittels der programmierbaren Maschine ist es somit in relativ einfacher Weise möglich, ein unbeabsichtigtes Aktivieren des Automatikbetriebs zu verhindern, da dieser automatisch geblockt wird, wenn der erste Datenträger nicht mit der Schnittstelle der Maschine operativ gekoppelt ist. Wird der erste Datenträger von der Maschine entnommen, dann stoppt diese somit automatisch ihren Automatikbetrieb und wechselt in ihren Handbetrieb. Eine spezielle Auswahl des Handbetriebs, wie z.B. Teachen oder Programmieren, Testen der Maschine mit reduzierter oder relativ hoher Geschwindigkeit, kann, wie es allgemein bekannt ist, z.B. mittels eines Wahlschalters oder einer sonstigen Wahleinrichtung erfolgen.

Das erfindungsgemäße Programmierhandgerät ist insbesondere für das Erstellen des für den Automatikbetrieb verwendeten Rechenprogramms vorgesehen. Wird das Programmierhandgerät eingesetzt, dann soll die Maschine im Handbetrieb betrieben werden. Dadurch, dass das erfindungsgemäße Programmierhandgerät die ihre Schnittstelle umfasst, die gegebenenfalls als zweites Lesegerät ausgeführt ist, ist es z.B. möglich, ein einziges Programmierhandgerät für verschiedene Maschinen zu verwenden, wobei das Programmierhandgerät nur dann die Maschine beeinflussen kann, wenn der erste Datenträger operativ mit der Schnittstelle des Programmierhandgerätes gekoppelt ist.

Wird das erfindungsgemäße Programmierhandgerät zum Programmieren der erfindungsgemäßen Maschine verwendet, ist zudem sicher gestellt, dass die Maschine während des Verwendens des Programmierhandgerätes nicht ungewollt in den Automatikbetrieb schaltet oder geschaltet wird, da ja der erste Datenträger operativ mit der Schnittstelle des Programmierhandgeräts gekoppelt und somit nicht mehr operativ mit der Schnittstelle der Maschine gekoppelt ist.

Ist im ersten Datenträger der der Maschine zugeordneter Code gespeichert, dann ist nach einer Variante des erfindungsgemäße Programmierhandgeräts dieses derart eingerichtet, dass es über die Schnittstelle des Programmierhandgerätes den Code vom ersten Datenträger ausliest, um eine Kommunikation zwischen dem Programmierhandgerät und der Maschine zu ermöglichen.

Das erfindungsgemäße Programmierhandgerät ist eingerichtet, mittels der weiteren Schnittstelle den personalisierten zweiten Datenträger auszulesen und aufgrund des ausgelesenen personalisierten zweiten Datenträgers dem personalisierten zweiten Datenträger zugeordnete Funktionen des Programmierhandgerätes zu aktivieren und/oder zu deaktivieren. Der zweite Datenträger, der insbesondere vom selben Typ wie der erste Datenträger ist, ist personalisiert, d.h. einer bestimmten Person zugeordnet. Bevor diese bestimmte Person das erfindungsgemäße Programmierhandgerät verwenden kann, indem sie den ersten Datenträger operativ mit der Schnittstelle des Programmierhandgerätes koppelt, ist es möglich, die bestimmte Person aufgrund des personalisierten zweiten Datenträgers zu autorisieren. Auf dem personalisierten zweiten Datenträger ist z.B. ein der Person zugeordneter Code, z.B. deren Personalnummer, gespeichert, aufgrund dessen bestimmte Funktionen des Programmierhandgerätes aktiviert und/oder deaktiviert werden. Somit ist es in relativ einfacher Weise möglich, nur für die bestimmte Person vorgesehene Funktionen des Programmierhandgerätes frei zuschalten. Aufgrund der Identifikation der Person durch den personalisierten zweiten Datenträger ist es auch relativ einfache, von der Person mit dem Programmierhandgerät durchgeführte Aktionen zu protokollieren.

Das Programmierhandgeräts ist eingerichtet, die dem personalisierten zweiten Datenträger zugeordneten Funktionen des Programmierhandgerätes zu aktivieren und/oder zu deaktivieren, solange der personalisierte zweite Datenträger operativ mit der weiteren Schnittstelle des Programmierhandgerät gekoppelt ist. Somit kann das erfindungsgemäße Programmierhandgerät nur solange in Kombination mit der Maschine benützt werden, solange beide Datenträger mittels der weiteren Schnittstelle mit dem Programmierhandgerät operativ gekoppelt sind.

Gemäß einem weiteren Aspekt der Erfindung umfasst eine Vorrichtung eine erste programmierbare Maschine mit wenigstens einer ersten Achse und wenigstens einem ersten Steuerrechner, wenigstens eine zweite programmierbare Maschine mit wenigstens einer zweiten Achse, einem die zweite Achse steuernden zweiten Steuerrechner, wenigstens eine dritte programmierbare Maschine mit wenigstens einer dritten Achse und einem die dritte Achse steuernden dritten Steuerrechner und das erfindungsgemäße Programmierhandgerät auf, wobei die Steuerrechner der Maschinen miteinander vernetzt sind und der erste Datenträger nur der ersten und der zweiten Maschine zugeordnet ist und das Programmierhandgerät nur mit denjenigen Maschinen kommuniziert, denen der erste Datenträger zugeordnet ist, wenn dieser operativ mit der zweiten Schnittstelle des Programmierhandgeräts gekoppelt ist.

Die erste Maschine kann als ein erster Industrieroboter mit mehreren ersten Roboterachsen ausgeführt sein, dessen erster Steuerrechner eingerichtet ist, die ersten Roboterachsen zu steuern, die zweite Maschine kann als ein zweiter Industrieroboter mit mehreren zweiten Roboterachsen ausgeführt sein, dessen zweiter Steuerrechner eingerichtet ist, die zweiten Roboterachsen zu steuern, und die dritte Maschine kann als ein dritter Industrieroboter mit mehreren dritten Roboterachsen ausgeführt sein, dessen dritter Steuerrechner eingerichtet ist, die dritten Roboterachsen zu steuern. Gemäß dieser Ausgestaltung ist es in relativ einfacher Weise möglich, einen Teil von miteinander vernetzten Maschinen, insbesondere von vernetzten Industrierobotern mittels des erfindungsgemäßen Programmierhandgerätes im Handbetrieb zu Programmieren.

Mittels des erfindungsgemäßen Programmierhandgerätes kann insbesondere folgendes Verfahren durchgeführt werden, das folgende Verfahrensschritte aufweist:
- Entfernen eines ersten Datenträgers von einer Schnittstelle, wobei der erste Datenträger einer ersten programmierbaren Maschine zugeordnet ist, die wenigstens eine erste Achse und einen die erste Achse steuernden ersten Steuerrechner aufweist und die Maschine die Schnittstelle aufweist,
- operatives Koppeln des ersten Datenträgers mit einer Schnittstelle eines Programmierhandgerätes, und
- Aufbauen einer Kommunikation zwischen der ersten Maschine und dem Programmierhandgerät nur dann, wenn der erste Datenträger operativ mit der Schnittstelle des Programmierhandgerätes gekoppelt ist,
- Auslesen eines personalisierten zweiten Datenträgers mittels einer weiteren Schnittstelle des Programmierhandgerätes und
- Aktivieren und/oder Deaktivieren von dem personalisierten zweiten Datenträger zugeordneten Funktionen des Programmierhandgerätes, solange der personalisierte zweite Datenträger operativ mit der weiteren Schnittstelle des Programmierhandgerätes gekoppelt ist.

Dadurch kann sichergestellt werden, dass die Maschine während der Verwendung des Programmierhandgerätes nicht unbeabsichtigt in den Automatikbetrieb geschaltet wird. Auch ist eine Verwechslung des Programmierhandgerätes erschwert, da dieses durch das operative Koppeln des ersten Datenträgers über die zweite Schnittstelle mit dem Programmierhandgerät eindeutig der relevanten Maschine zugeordnet ist.

Vor dem Entfernen des ersten Datenträgers von der ersten Schnittstelle wird nach einer Variante die erste Maschine im Automatikbetrieb betrieben, der automatisch nach dem Entfernen des ersten Datenträgers von der ersten Schnittstelle beendet und gesperrt wird.

Nach einer Ausführungsform des erfindungsgemäßen Verfahrens werden folgende Verfahrensschritte durchgeführt:
- Vernetzen des ersten Steuerrechners mit einem zweiten Steuerrechner und mit einem dritten Steuerrechner, wobei der zweite Steuerrechner eine zweite programmierbare Maschine und der dritte Steuerrechner eine dritte programmierbare Maschine steuert und der erste Datenträger nur der ersten und der zweiten programmierbaren Maschine zugeordnet ist, und
- Aufbauen einer Kommunikation zwischen dem Programmierhandgerät und denjenigen programmierbaren Maschinen, denen der erste Datenträger zugeordnet ist, wenn der erste Datenträger operativ mit der Schnittstelle des Programmierhandgerätes gekoppelt ist.

Gemäß dieser Variante ist es möglich, eine Kommunikation zwischen dem Programmierhandgerät und wenigstens einem der vernetzten Maschinen herzustellen.

Ausführungsbeispiele der Erfindung sind exemplarisch in den beigefügten schematischen Zeichnungen dargestellt. Es zeigen:
- Fig. 1: einen Industrieroboter und ein Programmierhandgerät,
- Fig. 2: den Industrieroboter der Fig. 1,
- Fig. 3: das Programmierhandgerät der Fig. 1 und
- Fig. 4: mehrere vernetzte Industrieroboter.

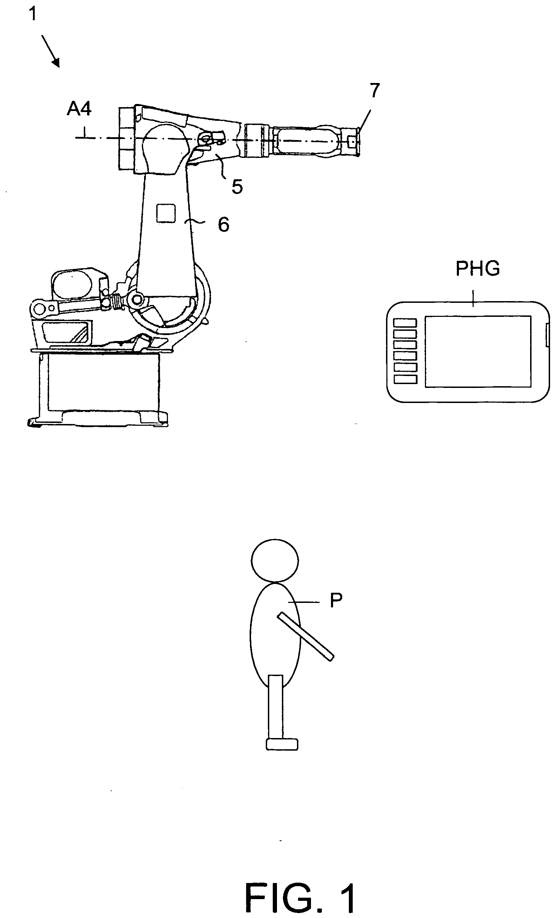

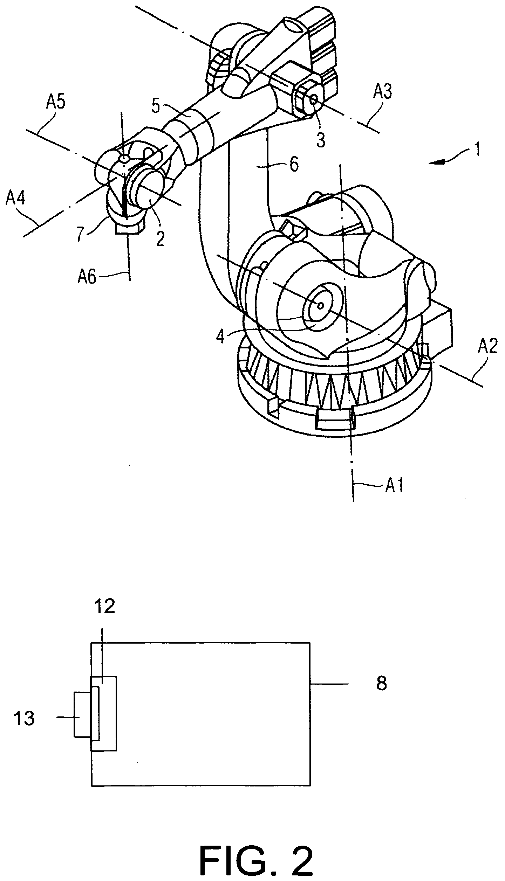

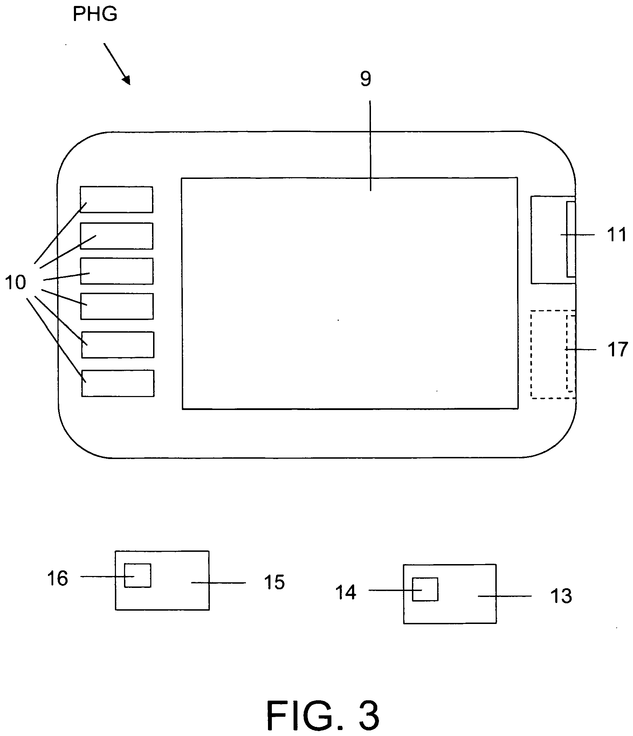

Die Fig. 1 zeigt als Beispiels einer programmierbaren Maschine einen in der Fig. 2 näher dargestellten Industrieroboter 1 mit einer Kinematik für Bewegungen in beispielsweise sechs Freiheitsgraden und ein in der Fig. 3 näher gezeigtes Programmierhandgerät PHG zum Programmieren und/oder Steuern des Industrieroboters 1.

Der Industrieroboter 1 weist in allgemein bekannter Weise Gelenke 2 bis 4, Hebel 5, 6, sechs Bewegungsachsen A1 bis A6 und einen Flansch 7 auf, an dem ein nicht näher dargestelltes Werkzeug befestigt sein kann. Jede der Bewegungsachsen A1 bis A6 wird von einem nicht näher dargestellten Antrieb bewegt. Die Antriebe umfassen beispielsweise jeweils einen elektrischen Motor und Getriebe, wie es dem Fachmann allgemein bekannt ist.

Der Industrieroboter 1 weist ferner einen Steuerrechner 8 auf, der mit den Antrieben des Industrieroboters 1 in nicht dargestellter Weise verbunden ist und diese in allgemein bekannter Weise mittels eines auf dem Steuerrechner 8 laufenden Rechnerprogramms steuert, so dass der Flansch 7 des Industrieroboters 1 eine vorgegebene Bewegung durchführt. Um das den Industrieroboter 1 steuernde Rechnerprogramm zu erstellen, wird im Falle des vorliegenden Ausführungsbeispiels das Programmierhandgerät PHG verwendet.

Im Falle des vorliegenden Ausführungsbeispiels weist das Programmierhandgerät PHG eine Anzeigevorrichtung 9 und mehrere Eingabemittel in Form von Tasten 10 auf, mittels derer eine Bewegung des Industrieroboters 1 bzw. die Lage und Orientierung des Flansches 7 oder des sogenannten Tool Center Points (TCP) des Industrieroboters 1 im Rahmen der Programmierung bewegt werden kann. Die Programmierung eines Industrieroboters mittels eines Programmierhandgerätes im Allgemeinen ist dem Fachmann bekannt und wird daher nicht weiter erläutert.

Im Falle des vorliegenden Ausführungsbeispiels kann der Industrieroboter 1 im sogenannten Automatikbetrieb und im sogenannten Handbetrieb betrieben werden. Der Handbetrieb ist u.A. dafür vorgesehen, den Industrieroboter 1 mittels des Programmierhandgerätes PHG zu programmieren. Im Automatikbetrieb steuert dagegen der Steuerrechner 8 bzw. das mittels der Programmierung erstellte Rechnerprogramm automatisch die Bewegung des Industrieroboters 1, wie es allgemein bekannt ist.

Im Falle des vorliegenden Ausführungsbeispieles ist dem Industrieroboter 1 ein in der Fig. 3 gezeigter elektronischer Datenträger 13 zugeordnet. Der Datenträger 13 umfasst einen Speicher 14, in dem ein dem Industrieroboter 1 zugeordneter Code, beispielsweise dessen Seriennummer, gespeichert ist. Des Weiteren umfasst der Industrieroboter 1 eine Schnittstelle 12, die im Falle des vorliegenden Ausführungsbeispieles am Steuerrechner 8 angeordnet ist, mittels derer der Industrieroboter 1 bzw. dessen Steuerrechner 8 den im Speicher 14 des elektronischen Datenträgers 13 gespeicherten Code auslesen kann.

Bei dem elektronischen Datenträger 13 handelt es sich beispielsweise um eine Chipkarte, um eine Speicherkarte, eine Magnetkarte oder insbesondere um einen RFID-Transponder. Die Schnittstelle 12 des Steuerrechners 8 ist demnach je nach verwendetem Datenträger, d. h. ob es sich um einen kontaktbehafteten oder um einen kontaktlosen elektronischen Datenträger 13 handelt, um eine kontaktbehaftete oder eine kontaktlose Schnittstelle 12. Die Schnittstelle 12 kann auch als ein Lesegerät ausgeführt sein. Dies ist insbesondere dann der Fall, wenn es sich beim elektronischen Datenträger 13 um einen RFID-Transponder handelt.

Im Falle des vorliegenden Ausführungsbeispieles ist der Industrieroboter 1 bzw. dessen Steuerrechner 8 derart eingerichtet, dass er über die Schnittstelle 12 den Code des elektronischen Datenträgers 13 ausliest und nur solange den Automatikbetrieb des Industrieroboters 1 erlaubt, solange der elektronische Datenträger 13 operativ mit der Schnittstelle 12 des Steuerrechners 8 gekoppelt ist.

Wird der elektronische Datenträger 13 von der Schnittstelle 12 des Steuerrechners 8 entfernt, so stoppt im Falle des vorliegenden Ausführungsbeispieles der Industrieroboter 1 sofort und schaltet automatisch in seinen Handbetrieb um.

Im Falle des vorliegenden Ausführungsbeispieles umfasst das Programmierhandgerät PHG ebenfalls eine Schnittstelle 11, über die das Programmierhandgerät PHG den Code des elektronischen Datenträgers 13 auslesen kann. Möchte beispielsweise eine der in der Fig. 1 gezeigten Person P mittels des Programmierhandgerätes PHG den Industrieroboter 1 manuell bewegen um z.B. diesen zu programmieren oder mit reduzierter oder hoher Geschwindigkeit zu testen, so entnimmt die Person P zunächst den elektronischen Datenträger 13 von der Schnittstelle 12 des Steuerrechners 8. Daraufhin schaltet der Industrieroboter 1 automatisch in seinen Handbetrieb. Anschließend koppelt die Person P den elektronischen Datenträger 13 operativ mit der Schnittstelle 11 des Programmierhandgerätes PHG. Dieses ließt daraufhin den im Speicher 14 des elektronischen Datenträgers 13 gespeicherten Code aus. Daraufhin ist das Programmierhandgerät PHG bereit, eine Kommunikation mit dem Industrieroboter 1 bzw. dessen Steuerrechner 8 herzustellen. Diese Kommunikation ist beispielsweise drahtlos, kann jedoch auch drahtgebunden sein. Aufgrund dieser Kommunikation kann die Person P den Industrieroboter 1 mittels des Programmierhandgerätes PHG z.B. programmieren, wie es im Grunde allgemein bekannt ist.

Des Weiteren ist im Falle des vorliegenden Ausführungsbeispieles das Programmierhandgeräte PHG derart ausgeführt, dass es nur solange die Kommunikation zum Steuerrechner 8 aufrecht hält, solange der elektronische Datenträger 13 mit der Schnittstelle 11 des Programmierhandgerätes PHG operativ gekoppelt ist.

Gemäß einem weiteren Ausführungsbeispiel ist der Person P ein personalisierter elektronischer Datenträger 15 mit einem Speicher 16 zugeordnet. Im Speicher 16 des personalisierten elektronischen Datenträgers 15 ist im Falle des vorliegenden Ausführungsbeispieles ein der Person P zugeordneter Code, beispielsweise deren Personalnummer, gespeichert. Bevor die Person P das Programmierhandgerät PHG aktivieren kann, indem sie den dem Industrieroboter 1 zugeordneten elektronischen Datenträger 13 mit der Schnittstelle 11 des Programmierhandgerätes PHG operativ koppelt, muss sie im vorliegenden Ausführungsbeispiel ihren personalisierten elektronischen Datenträger 15 zunächst operativ mit der Schnittstelle 11 des Programmierhandgerätes PHG koppeln. Dieses liest daraufhin den im Speicher 16 des personalisierten Datenträgers 15 gespeicherten, der Person P zugeordneten Code aus und aktiviert bzw. deaktiviert aufgrund des ausgelesenen Codes nur diejenigen Funktionen des Programmierhandgerätes PHG, die für die Person P vorgesehen sind.

Nach dem Auslesen des der Person P zugeordneten Codes aus dem Speicher 16 des personalisierten Datenträgers 15 verbindet die Person P den dem Industrieroboter 1 zugeordneten elektronischen Datenträger 13 mit der Schnittstelle 11 des Programmierhandgerätes PHG, damit das Programmierhandgerät mit dem Steuerrechner 8 des Industrieroboters 1 kommunizieren kann.

Gemäß einem weiteren Ausführungsbeispiel umfasst das Programmierhandgerät eine zweite Schnittstelle 17, die für den personalisierten elektronischen Datenträger 15 vorgesehen ist. Gemäß diesem Ausführungsbeispiel ist das Programmierhandgerät PHG nur dann funktionsfähig, wenn der personalisierte elektronische Datenträger 15 mit der Schnittstelle 17 und der dem Industrieroboter 1 zugeordnete elektronische Datenträger 13 mit der Schnittstelle 11 operativ gekoppelt ist.

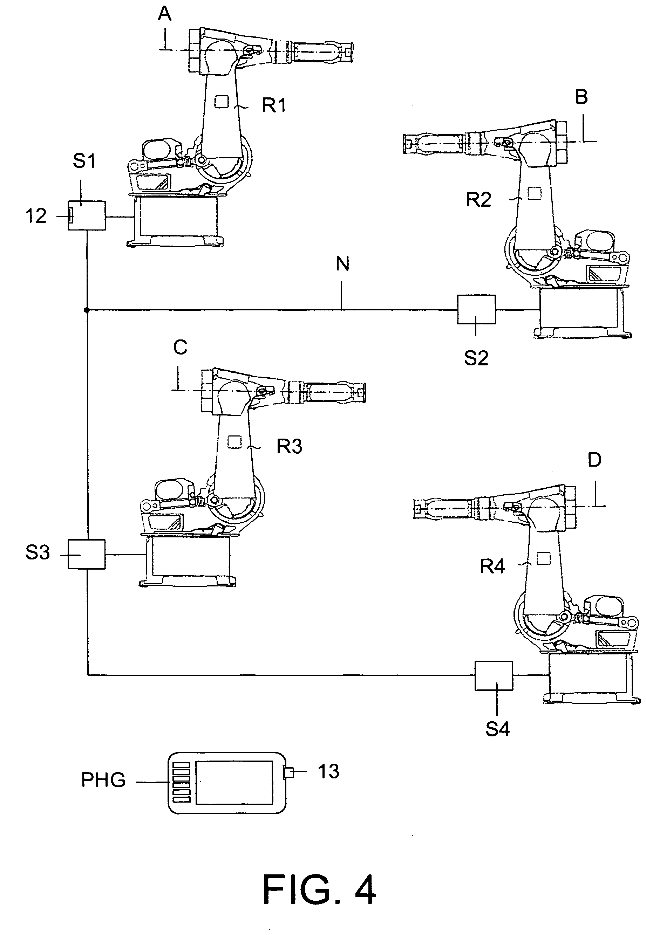

Die Fig. 4 zeigt ein weiteres Ausführungsbeispiel. Gemäß diesem Ausführungsbeispiel sind mehrere Industrieroboter R1 - R4 vorgesehen, die jeweils mehrere Achsen und jeweils einen den entsprechenden Achsen steuernden Steuerrechner S1 - S4 aufweisen. In der Fig. 4 ist nur eine der Achsen A des ersten Industrieroboters R1, eine der Achsen B des zweiten Industrieroboters R2, eine der Achsen C des dritten Industrieroboters R3 und eine der Achsen D des vierten Industrieroboters R4 dargestellt.

Die Steuerrechner S1 - S4 der Industrieroboter R1 - R4 sind mittels eines Netzwerkes N miteinander vernetzt. Im Falle des vorliegenden Ausführungsbeispieles ist es vorgesehen, dass im Automatikbetrieb der erste und der zweite Roboter R1, R2 miteinander kooperieren können. Des Weiteren ist vorgesehen, dass der elektronische Datenträger 13 sowohl dem ersten als auch dem zweiten Industrieroboter R1, R2 zugeordnet ist und der erste und zweite Industrieroboter R1, R2 nur solange in ihren Automatikbetrieben betreibbar sind, solange der elektronische Datenträger 13 mit einer Schnittstelle 12 des ersten Steuerrechners S1 des ersten Industrieroboters R1 operativ gekoppelt ist.

Wird der elektronische Datenträger 13 von der Schnittstelle 12 des ersten Steuerrechners S1 entfernt, so beenden automatisch der erste und zweite Industrieroboter R1, R2 ihre Automatikbetriebe und schalten in ihre Handbetriebe. Ist der elektronische Datenträger 13 operativ mit der Schnittstelle 11 des Programmierhandgerätes PHG gekoppelt, dann stellt das Programmierhandgerät PHG eine Kommunikation mit den Steuerrechnern S1, S2 des ersten und zweiten Industrieroboters R1, R2 her, damit z.B. die Person P die beiden Industrieroboter R1, R2 programmieren kann.

## Patentansprüche

1. Programmierhandgerät zum Programmieren/Steuern einer programmierbaren Maschine (1, R1, R2), aufweisend eine zweite Schnittstelle (11), über die das Programmierhandgerät (PHG) einen der Maschine (1, R1, R2) zugeordneten ersten Datenträger (13) ausliest, wobei das Programmierhandgerät (PHG) derart eingerichtet ist, dass es nur dann die Maschine (1, R1, R2) beeinflussen kann, solange der erste Datenträger (13) operativ mit der zweiten Schnittstelle (11) gekoppelt ist, **dadurch gekennzeichnet, dass** das Programmierhandgerät (PHG) eingerichtet ist, mittels einer dritten Schnittstelle (17) des Programmierhandgerätes (PHG) einen personalisierten zweiten Datenträger (15) auszulesen und aufgrund des ausgelesenen personalisierten zweiten Datenträgers (15) dem personalisierten zweiten Datenträger (15) zugeordnete Funktionen des Programmierhandgerätes (PHG) zu aktivieren oder zu deaktivieren, solange der personalisierte zweite Datenträger (15) operativ mit der dritten Schnittstelle (17) des Programmierhandgerätes (PHG) gekoppelt ist.

2. Programmierhandgerät nach Anspruch 1, wobei auf dem ersten Datenträger (13) ein der Maschine (1, R1) zugeordneter Code gespeichert ist, den das Programmierhandgerät (PHG) über die zweite Schnittstelle (11) ausliest, um eine Kommunikation zwischen dem Programmierhandgerät (PHG) und der Maschine (1, R1, R2) zu ermöglichen.

3. Vorrichtung, aufweisend ein Programmierhandgerät (PHG) nach Anspruch 1 oder 2 und eine erste programmierbare Maschine, die wenigstens eine erste Achse (A, B, A1-A6), wenigstens einen ersten Steuerrechner (8, S1, S2) zum Steuern der Achse (A, B, A1-A6), den ersten Datenträger (13) und eine erste Schnittstelle (12) zum Auslesen des ersten Datenträgers (13) aufweist, wobei die erste Maschine (1, R1, R2) in einem Handbetrieb, in dem die erste Maschine (1, R1, R2) mittels des Programmierhandgerätes (PHG) programmierbar und/oder steuerbar ist, und in einem Automatikbetrieb, in dem der erste Steuerrechner (8, S1, S2) automatisch die Achse (A, B, A1-A6) steuert, betreibbar ist und wobei die erste Maschine (1, R1, R2) nur dann in ihrem Automatikbetrieb betreibbar ist, wenn der erste Datenträger (13) operativ mit der ersten Schnittstelle (12) der ersten Maschine (1, R1, R2) gekoppelt ist.

4. Vorrichtung nach Anspruch 3, wobei
- der erste Steuerrechner (8, S1) die erste Schnittstelle (12) umfasst,
- die erste Maschine ein erstes Lesegerät aufweist, das die erste Schnittstelle (12) umfasst,
- die erste Maschine als ein Industrieroboter (1, R1, R2) mit mehreren Roboterachsen (A, B, A1-A6) ausgeführt ist und dessen Steuerrechner (8, S1, S2) eingerichtet ist, die Roboterachsen (A, B A1-A6) zu steuern,
- auf dem ersten Datenträger (13) ein der ersten Maschine (1, R1, R2) zugeordneter Code gespeichert ist, den die erste Maschine (1, R1, R2) über die erste Schnittstelle (12) ausliest, um im Automatikbetrieb betrieben zu werden, und
- der erste Datenträger (13) ein kontaktgebundener oder ein kontaktloser elektronischer Datenträger, insbesondere eine Speicherkarte, eine Chipkarte, ein USB-Stick oder ein Transponder ist.

5. Vorrichtung nach Anspruch 3 oder 4, aufweisend
- wenigstens eine zweite programmierbare Maschine (R2) mit wenigstens einer zweiten Achse (B) und einem die zweite Achse (B) steuernden zweiten Steuerrechner (S2), und
- wenigstens eine dritte programmierbare Maschine (R3, R4) mit wenigstens einer dritten Achse (C, D) und einem die dritte Achse (C, D) steuernden dritten Steuerrechner (S3, S4) wobei die Steuerrechner (S1-S4) der Maschinen (R1-R4) miteinander vernetzt sind und der erste Datenträger (13) nur der ersten und der zweiten Maschine (R1, R2) zugeordnet ist und das Programmierhandgerät (PHG) nur mit denjenigen Maschinen (R1, R2) kommuniziert, denen der erste Datenträger (13) zugeordnet ist, wenn dieser mit der zweiten Schnittstelle (11) des Programmierhandgeräts (PHG) operativ gekoppelt ist.

6. Verfahren zum Programmieren einer programmierbaren Maschine, aufweisend folgende Verfahrensschritte:
- Entfernen eines ersten Datenträgers (13) von einer ersten Schnittstelle (12), wobei der erste Datenträger (13) einer ersten programmierbaren Maschine (1, R1) zugeordnet ist, die wenigstens eine erste Achse (A, A1-A6) und einen die erste Achse (A, A1-A6) steuernden ersten Steuerrechner (8, S1) aufweist und die erste programmierbare Maschine (1, R1) die erste Schnittstelle (12) aufweist,
- operatives Koppeln des ersten Datenträgers (13) mit einer zweiten Schnittstelle (11) eines Programmierhandgerätes (PHG),
- Aufbauen einer Kommunikation zwischen der ersten Maschine (1, R1) und dem Programmierhandgerät (PHG) nur dann, wenn der erste Datenträger (13) operativ mit der zweiten Schnittstelle (11) des Programmierhandgerätes (PHG) gekoppelt ist,
**gekennzeichnet durch** die Schritte:
- Auslesen eines personalisierten zweiten Datenträgers (15) mittels einer dritten Schnittstelle (17) des Programmierhandgerätes (PHG) und
- Aktivieren oder Deaktivieren von dem personalisierten zweiten Datenträger (15) zugeordneten Funktionen des Programmierhandgerätes (PHG) und der Steuerung der ersten programmierbaren Maschine (1, R1), solange der personalisierte zweite Datenträger (15) operativ mit der dritten Schnittstelle (17) des Programmierhandgerätes (PHG) gekoppelt ist.

7. Verfahren nach Anspruch 6,
- bei dem der erste Steuerrechner (1, S1) die erste Schnittstelle (12) umfasst,
- die erste Maschine als ein Industrieroboter (1, R1) mit mehreren ersten Roboterachsen (A, A1-A6) ausgeführt ist und dessen erster Steuerrechner (8, S1) eingerichtet ist, die Roboterachsen (A, A1-A6) zu steuern,
- die erste Schnittstelle (12) als ein erstes Lesegerät ausgebildet ist,
- die zweite Schnittstelle (11) als ein zweites Lesegerät ausgebildet ist, und
- der erste Datenträger (13) ein kontaktgebundener oder ein kontaktloser elektronischer Datenträger ist, insbesondere eine Speicherkarte, eine Chipkarte, ein USB-Stick oder ein Transponder ist.

8. Verfahren nach Anspruch 6 oder 7, zusätzlich aufweisend:
- vor dem Entfernen des ersten Datenträgers (13) von der ersten Schnittstelle (12), Betreiben der ersten Maschine (1, R1) in einem Automatikbetrieb, in dem der erste Steuerrechner (8, S1) automatisch die erste Achse (A, A1-A6) steuert, und automatisches Beenden und Sperren des Automatikbetriebs der ersten Maschine (1, R1) nach dem Entfernen des ersten Datenträgers (13) von der ersten Schnittstelle (12), und/oder
- Auslesen eines in dem ersten Datenträger (13) gespeicherten und der ersten Maschine (1, R1) zugeordneten Codes mittels der zweiten Schnittstelle (11) und Aufbauen der Kommunikation zwischen der ersten Maschine (1, R1) und dem Programmierhandgerät (PHG).

9. Verfahren nach einem der Ansprüche 6 bis 8, zusätzlich aufweisend:
- Vernetzen des ersten Steuerrechners (S1) mit einem zweiten Steuerrechner (S2) und mit einem dritten Steuerrechner (S3, S4), wobei der zweite Steuerrechner (S2) eine zweite programmierbare Maschine (R2) und der dritte Steuerrechner (S3, S4) eine dritte programmierbare Maschine (R3, R4) steuert und der erste Datenträger (13) nur der ersten und der zweiten programmierbaren Maschine (R1, R2) zugeordnet ist, und
- Aufbauen einer Kommunikation zwischen dem Programmierhandgerät (PHG) und denjenigen programmierbaren Maschinen (R1, R2), denen der erste Datenträger (13) zugeordnet ist, wenn der erste Datenträger (13) operativ mit der zweiten Schnittstelle (11) des Programmierhandgerätes (PHG) gekoppelt ist.

## Claims

1. Handheld programming device for programming/controlling a programmable machine (1, R1, R2), having a second interface (11) via which the handheld programming device (PHG) reads a first data carrier (13) assigned to the machine (1, R1, R2), wherein the handheld programming device (PHG) is configured such that it can only influence the machine (1, R1, R2) as long as the data carrier (13) is coupled operatively to the second interface (11), **characterised in that** the handheld programming device (PHG) is configured to read a personalised second data carrier (15) by means of a third interface (17) of the handheld programming device (PHG) and on the basis of the read personalised second data carrier (15) to activate or deactivate functions of the handheld programming device (PHG) assigned to the personalised second data carrier (15), as long as the personalised second data carrier (15) is coupled operatively to the third interface (17) of the handheld programming device (PHG).

2. Handheld programming device according to claim 1, wherein on the first data carrier (13) a code assigned to the machine (1, R1) is saved, which the handheld programming device (PHG) reads via the second interface (11) to enable communication between the handheld programming device (PHG) and the machine (1, R1, R2).

3. Device, comprising a handheld programming device (PHG)according to claim 1 or 2 and a first programmable machine, which has at least one first axis (A, B, A1-A6), at least one first control computer (8, S1, S2) for controlling the axis (A, B, A1-A6), the first data carrier (13) and a first interface (12) for reading the first data carrier (13), wherein the first machine (1, R1, R2) can be operated in a manual mode, in which the first machine (1, R1, R2) can be programmed and/or controlled by means of the handheld programming device (PHG), and in an automatic mode, in which the first control computer (8, S1, S2) automatically controls the axis (A, B, A1-A6) and wherein the first machine (1, R1, R2) can only be operated in its automatic mode when the first data carrier (13) is coupled operatively to the first interface (12) of the first machine (1, R1, R2).

4. Device according to claim 3, wherein
- the first control computer (8, S1) comprises the first interface (12),
- the first machine has a first reader which comprises the first interface (12),
- the first machine is designed as an industrial robot (1, R1, R2) with a plurality of robot axes (A, B, A1-A6) and the control computer (8, S1, S2) is configured to control the robot axes (A, B, A1-A6),
- on the first data carrier (13) a code assigned to the first machine (1, R1, R2) is saved, which the first machine (1, R1, R2) reads via the first interface (12) in order to be operated in automatic mode and
- the first data carrier (13) is a contact or contactless electronic data carrier, in particular a smart card, a chip card, a USB stick or a transponder.

5. Device according to claim 3 or 4, having
- at least one second programmable machine (R2) with at least one second axis (B), and a second control computer (S2) controlling second axis (B), and
- at least one third programmable machine (R3, R4) with at least one third axis (C, D) and a third control computer (S3, S4) controlling the third axis (C, D), wherein the control computers (S1-S4) of the machines (R1-R4) are networked with one another and the first data carrier (13) is only assigned to the first and the second machine (R1, R2) and the handheld programming device (PHG) only communicates with those machines (R1, R2) to which the first data carrier (13) is assigned, when the latter is coupled operatively to the second interface (11) of the handheld programming device (PHG).

6. Method for programming a programmable machine, having the following method steps:
- removing a first data carrier (13) from a first interface (12), wherein the first data carrier (13) is assigned to a first programmable machine (1, R1), which has at least one first axis (A, A1-A6) and a first control computer (8, S1) controlling the first axis (A, A1-A6) and the first programmable machine (1, R1) comprises the first interface (12),
- operatively coupling the first data carrier (13) with a second interface (11) of a handheld programming device (PHG),
- establishing communication between the first machine (1, R1) and the handheld programming device (PHG) only when the first data carrier (13) is operatively connected to the second interface (11) of the handheld programming device (PHG),
**characterised by** the steps:
- reading a personalised second data carrier (15) by means of a third interface (17) of the handheld programming device (PHG) and
- activating or deactivating functions of the handheld programming device (PHG) assigned to the personalised second data carrier (15) and the control of the first programmable machine (1, R1) as long as the personalised second data carrier (15) is coupled operatively to the third interface (17) of the handheld programming device (PHG).

7. Method according to claim 6,
- wherein the first control computer (1, S1) comprises the first interface (12),
- the first machine is designed as an industrial robot (1, R1) with a plurality of first robot axes (A, A1-A6) and the first control computer (8, S1) of which is configured to control the robot axes (A, A1-A6),
- the first interface (12) is designed as a first reader,
- the second interface (11) is designed as a second reader and
- the first data carrier (13) is a contact or contactless electronic data carrier, in particular a smart card, a chip card, a USB-Stick or a transponder.

8. Method according to claim 6 or 7, additionally comprising:
- before removing the first data carrier (13) from the first interface (12), operating the first machine (1, R1) in an automatic mode, in which the first control computer (8, S1) automatically controls the first axis (A, A1-A6), and automatically ending and blocking the automatic operation of the first machine (1, R1) after removing the first data carrier (13) from the first interface (12) and/or
- reading a code saved in the first data carrier (13) and assigned to the first machine (1, R1) by means of the second interface (11) and establishing communication between the first machine (1, R1) and the handheld programming device (PHG).

9. Method according to any of claims 6 to 8, additionally comprising:
- networking the first control computer (S1) with a second control computer (S2) and with a third control computer (S3, S4), wherein the second control computer (S2) controls a second programmable machine (R2) and the third control computer (S3, S4) controls a third programmable machine (R3, R4) and the first data carrier (13) is only assigned to the first and the second programmable machine (R1, R2) and
- establishing communication between the handheld programming device (PHG) and those programmable machines (R1, R2) to which the first data carrier (13) is assigned, when the first data carrier (13) is coupled operatively to the second interface (11) of the handheld programming device (PHG).

## Revendications

1. Appareil manuel de programmation pour programmer/ commander une machine programmable (1, R1, R2), présentant une deuxième interface (11) via laquelle l'appareil manuel de programmation (PHG) lit un premier support de données (13) associé à la machine (1, R1, R2), l'appareil manuel de programmation (PHG) étant configuré de telle manière qu'il ne peut influencer la machine (1, R1, R2) que tant que le premier support de données (13) est couplé de manière opérationnelle à la deuxième interface (11), **caractérisé, en ce que** l'appareil manuel de programmation (PHG) est configuré pour lire un deuxième support de données personnalisé (15) au moyen d'une troisième interface (17) de l'appareil manuel de programmation (PHG) et, sur la base du deuxième support de données personnalisé lu (15), pour activer ou désactiver des fonctions de l'appareil manuel de programmation (PHG) associées au deuxième support de données personnalisé (15), tant que le deuxième support de données personnalisé (15) est couplé de manière opérationnelle à la troisième interface (17) de l'appareil manuel de programmation (PHG).

2. Appareil manuel de programmation selon la revendication 1, dans lequel sur le premier support de données (13) est mémorisé un code associé à la machine (1, R1), qui est lu par l'appareil manuel de programmation (PHG) via la seconde interface (11) afin de permettre une communication entre l'appareil manuel de programmation (PHG) et la machine (1, R1, R2).

3. Dispositif comprenant un appareil manuel de programmation (PHG) selon la revendication 1 ou 2 et une première machine programmable qui présente au moins un premier axe (A, B, A1-A6), au moins un premier ordinateur de commande (8, S1, S 2) pour commander l'axe (A, B, A1-A6), le premier support de données (13) et une première interface (12) pour la lecture du premier support de données (13), la première machine (1, R1, R2) pouvant fonctionner dans un mode manuel, dans lequel la première machine (1, R1, R2) peut être programmée et/ou commandée au moyen de l'appareil manuel de programmation (PHG) et dans un mode automatique dans lequel le premier ordinateur de commande (8, S1, S2) commande automatiquement l'axe (A, B, A1-A6), et la première machine (1, R1, R2) ne pouvant fonctionner dans son mode automatique que si le premier support de données (13) est couplé de manière opérationnelle avec la première interface (12) de la première machine (1, R1, R2).

4. Dispositif selon la revendication 3, dans lequel
- le premier ordinateur de commande (8, S1) comprend la première interface (12),
- la première machine présente un premier lecteur qui comprend la première interface (12),
- la première machine est réalisée en tant qu'un robot industriel (1, R1) avec une pluralité d'axes de robot (A, B, A1-A6) et dont l'ordinateur de commande (8, S1, S2) est configuré pour commander les axes de robot (A, B, A1-A6),
- sur le premier support de données (13) est mémorisé un code attribué à la première machine (1, R 1, R2), que la première machine (1, R 1, R2) lit via la première interface (12) afin de pouvoir fonctionner en mode automatique, et
- le premier support de données (13) est un support de données électronique par contact ou sans contact, en particulier une carte mémoire, une carte à puce, une clé USB ou un transpondeur.

5. Dispositif selon la revendication 3 ou 4, comprenant
- au moins une deuxième machine (R2) programmable comportant au moins un deuxième axe (B) et un deuxième ordinateur de commande (S2) qui commande le deuxième axe (B), et
- au moins une troisième machine (R 3, R4) programmable comportant au moins un troisième axe (C, D) et un troisième ordinateur de commande (S 3, S4) qui commande le troisième axe (C, D), les ordinateurs de commande (S1-S4) des machines (R1-R4) étant reliés entre eux ,et le premier support de données (13) n'étant associé qu'à la première et à la deuxième machine (R1, R2), et l'appareil manuel de programmation (PHG) ne communiquant qu'avec les machines (R1, R2) auxquelles le premier support de données (13) est associé, si celui-ci est couplé de manière opérationnelle à la seconde interface (11) de l'appareil de programmation (PHG).

6. Procédé de programmation d'une machine programmable, comprenant les étapes de procédé suivantes :
- retrait d'un premier support de données (13) d'une première interface (12), le premier support de données (13) étant associé à une première machine programmable (1, R1) qui présente au moins un premier axe (A, A1-A6) et un premier ordinateur de commande (8, S1) qui commande le premier axe (A, A1-A6), et la première machine programmable (1, R 1) présentant la première interface (12),
- couplage opérationnel du premier support de données (13) à une deuxième interface (11) d'un appareil manuel de programmation (PHG),
- établissement d'une communication entre la première machine (1, R1) et l'appareil manuel de programmation (PHG) seulement si le premier support de données (13) est couplé de manière opérationnelle à la deuxième interface (11) de l'appareil manuel de programmation (PHG),
**caractérisé par** les étapes suivantes :
- lecture d'un deuxième support de données personnalisé (15) au moyen d'une troisième interface (17) de l'appareil manuel de programmation (PHG) et
- activation ou désactivation des fonctions de l'appareil manuel de programmation (PHG) associées au deuxième support de données personnalisé (15) et de la commande de la première machine programmable (1, R1) tant que le deuxième support de données personnalisé (15) est couplé de manière opérationnelle à la troisième interface (17) de l'appareil manuel de programmation (PHG).

7. Procédé selon la revendication 6,
- dans lequel le premier ordinateur de commande (1, S1) comprend la première interface (12),
- la première machine est conçue en tant qu'un robot industriel (1, R1) avec une pluralité de premiers axes de robot (A, A1-A6) et dont le premier ordinateur de commande (8, SI) est configuré pour commander les axes de robot (A, A1-A6),
- la première interface (12) est réalisée en tant que premier lecteur,
- la deuxième interface (11) est réalisée en tant que deuxième lecteur, et
- le premier support de données (13) est un support de données électronique par contact ou sans contact, en particulier une carte mémoire, une carte à puce, une clé USB ou un transpondeur.

8. Procédé selon la revendication 6 ou 7, présentant en outre :
- avant le retrait du premier support de données (13) de la première interface (12), le fonctionnement de la première machine (1, R1) dans un mode automatique, dans lequel le premier ordinateur de commande (8, S1) commande automatiquement le premier axe (A, A1-A6) et terminaison et blocage automatique du mode automatique de la première machine (1, R1) après le retrait du premier support de données (13) de la première interface (12), et/ou
- la lecture d'un code mémorisé sur le premier support de données (13) et associé à la première machine (1, R1 au moyen de la deuxième interface (11) et établissement de la communication entre la première machine (1, R1) et l'appareil manuel de programmation (PHG).

9. Procédé selon l'une quelconque des revendications 6 à 8, présentant en outre :
- l'interconnexion du premier ordinateur de commande (S1) avec un deuxième ordinateur de commande (S2) et avec un troisième ordinateur de commande (S3, S4), le deuxième ordinateur de commande (S2) commandant une deuxième machine programmable (R1) et le troisième ordinateur de commande (S 3, S4) commandant une troisième machine programmable (R 3, R4), et le premier support de données (13) étant associé seulement à la première et à la deuxième machine programmables (R 1, R2), et
- l'établissement d'une communication entre l'appareil manuel de programmation (PHG) et les machines programmables (R 1, R 2) auxquelles le premier support de données (13) est associé lorsque le premier support de données (13) est couplé de manière opérationnelle à la seconde interface (11) de l'appareil manuel de programmation (PHG).
